# EUROPEAN PATENT APPLICATION

(11) **EP 1 306 988 A2**
(43) Date of publication of application: **02.05.2003**
(21) Application number: 02007322.7
(22) Date of filing: 04.04.2002
(51) Int. Cl.: H04B 10/17

(54) **Wavelength/band-specific optical amplifier**

(30) Priority: 26.10.2001 JP 2001329085
(71) Applicant: FUJITSU LIMITED, Kawasaki-shi, Kanagawa 211-8588 (JP)
(72) Inventor: Shimojoh, Naomasa, Fujisawa-shi, Kanagawa 251-0052 (JP)
(74) Representative: HOFFMANN - EITLE

(57) **Abstract**

A transmission device (30; 58) houses a plurality of transmission lines (1, 2). Each of the transmission lines (1, 2) propagates multiplex optical signals of a plurality of wavelength bands (A-band, B-band). The transmission device (30; 58) comprises an optical amplifier (36, 38) used commonly for each of said wavelength bands (A-band, B-band). The optical amplifier (36, 38) is provided commonly for all of said transmission lines (1, 2).

## Description

### BACKGROUND OF THE INVENTION

### 1. Field of the Invention

The present invention generally relates to a transmission device, and more particularly, to a transmission device amplifying and transmitting a multiple-wavelength signal including two different wavelength bands.

### 2. Description of the Related Art

Currently, an optical amplification repeater is used as a transmission device for performing a long-distance optical transmission. Additionally, a wavelength division multiplexing (WDM) optical transmission method draws attention as a means for providing a large capacity for the optical amplification repeater. The WDM optical transmission method is a method of multiplexing and transmitting an optical signal having a plurality of different wavelengths in one transmission line. A WDM optical amplification repeating device combining this WDM optical transmission method and an optical amplification repeating method is capable of amplifying and transmitting a large-capacity optical signal having a plurality of different wavelengths all at once.

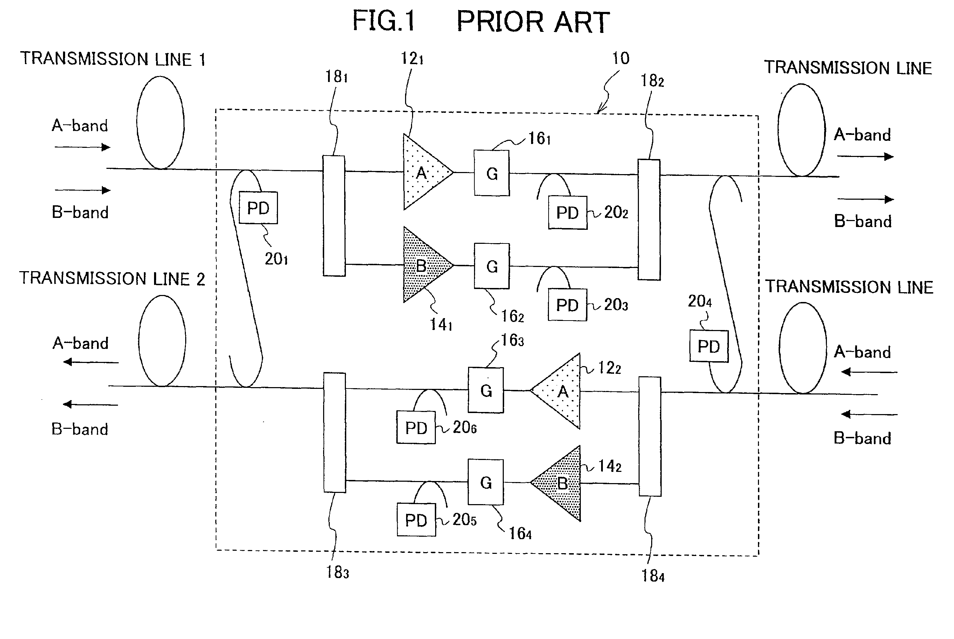

FIG.1 is a diagram of an example of this WDM optical amplification repeating device. An optical amplification repeater 10 shown in FIG.1 comprises wavelength division multiplexing (WDM) devices 18₁, 18₂, 18₃ and 18₄, optical amplifiers 12₁ and 12₂ amplifying a multiplex wave signal A-band, optical amplifiers 14₁ and 14₂ amplifying a multiplex wave signal B-band, gain devices 16₁, 16₂, 16₃ and 16₄, and photodiodes (PDs) 20₁, 20₂, 20₃, 20₄, 20₅ and 20₆. In this WDM optical amplification repeating device, the multiplex wave signals A-band and B-band are propagated in an identical direction through each of transmission lines 1 and 2.

In the above-described structure, the multiplex wave signals A-band and B-band are propagated through, for example, the transmission line 1, as follows. The input multiplex wave signals A-band and B-band are divided by the WDM device 18₁. Then, the multiplex wave signal A-band is amplified by the optical amplifier 12₁, and the multiplex wave signal B-band is amplified by the optical amplifier 14₁. A gain of the multiplex wave signal A-band is adjusted by the gain device 16₁, and a gain of the multiplex wave signal B-band is adjusted by the gain device 16₂. The wave signals A-band and B-band are re-multiplexed by the WDM device 18₂ so as to be output.

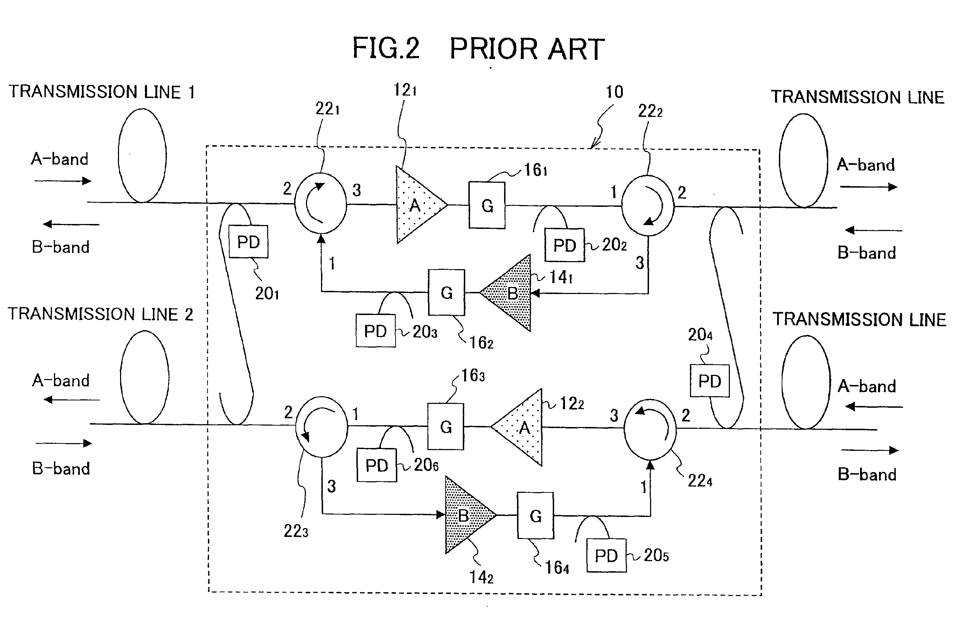

Next, a description will be given, with reference to FIG.2, of another example of the WDM optical amplification repeating device in which the multiplex wave signals A-band and B-band are propagated in opposite directions through each of the transmission lines 1 and 2. The optical amplification repeater 10 shown in FIG.2 comprises optical circulators 22₁, 22₂, 22₃ and 22₄ in place of the WDM devices 18₁, 18₂, 18₃ and 18₄ shown in FIG.1.

In the structure shown in FIG.2, the multiplex wave signals A-band and B-band are propagated through, for example, the transmission line 1, as follows. The input multiplex wave signal A-band is transmitted through the optical circulator 22₁, and is amplified by the optical amplifier 12₁. Then, the gain of the multiplex wave signal A-band is adjusted by the gain device 16₁. Subsequently, the wave signal A-band is re-multiplexed by the optical circulator 22₂ so as to be output. On the other hand, the input multiplex wave signal B-band is transmitted through the optical circulator 22₂, and is amplified by the optical amplifier 14₁. Then, the gain of the multiplex wave signal A-band is adjusted by the gain device 16₂. Subsequently, the wave signal A-band is re-multiplexed by the optical circulator 22₁ so as to be output.

As described above, each of the two examples of the optical amplification repeater 10 shown in FIG.1 and FIG.2 comprises the optical amplifiers 12₁ and 14₁ (or 12₂ and 14₂) amplifying the multiplex wave signal A-band and the multiplex wave signal B-band, respectively, on each of the transmission lines 1 and 2.

Thus providing optical amplifiers on each transmission line not only results in a complicated structure but also raises costs.

### SUMMARY OF THE INVENTION

It is a general object of the present invention to provide an improved and useful transmission device in which the above-mentioned problems are eliminated.

A more specific object of the present invention is to provide a transmission device amplifying and transmitting a multiple-wavelength optical signal which device has a simple structure with a smaller number of components such as optical amplifiers.

In order to achieve the above-mentioned objects, there is provided according to one aspect of the present invention a transmission device housing a plurality of transmission lines each propagating multiplex optical signals of a plurality of wavelength bands, the device comprising:
an optical amplifier used commonly for each of the wavelength bands, the optical amplifier being provided commonly for all of the transmission lines.

According to the present invention, optical amplifiers are provided on an individual wavelength-band basis. Thus, the optical amplifiers need not be provided for each of the transmission lines.

Additionally, the transmission device according to the present invention may further comprise a wavelength division multiplexing unit dividing the multiplex optical signals propagated through each of the transmission lines according to the wavelength bands so as to supply each of the multiplex optical signals to the optical amplifier, and multiplexing each of the multiplex optical signals amplified by the optical amplifier so as to output the multiplex optical signals.

According to the present invention, the multiplex optical signals propagated through the transmission lines can be supplied to the corresponding optical amplifiers according to the wavelength bands, and can be multiplexed after being amplified by the corresponding optical amplifiers.

In order to achieve the above-mentioned objects, there is also provided according to another aspect of the present invention a transmission device housing a first transmission line and a second transmission line each propagating a multiplex optical signal of a first wavelength band and a multiplex optical signal of a second wavelength band, the device comprising:
a first optical amplifier provided commonly for the first transmission line and the second transmission line so as to amplify the multiplex optical signal of the first wavelength band propagated through each of the first transmission line and the second transmission line; and
a second optical amplifier provided commonly for the first transmission line and the second transmission line so as to amplify the multiplex optical signal of the second wavelength band propagated through each of the first transmission line and the second transmission line.

According to the present invention, first and second common optical amplifiers are provided for the first and second wavelength bands, respectively. Thus, optical amplifiers need not be provided individually for each of the first and second transmission lines.

Additionally, the transmission device according to the present invention may further comprise a wavelength division multiplexing unit dividing the multiplex optical signal of the first wavelength band and the multiplex optical signal of the second wavelength band propagated through each of the first transmission line and the second transmission line so as to supply the multiplex optical signal of the first wavelength band and the multiplex optical signal of the second wavelength band to the first optical amplifier and the second optical amplifier, respectively, and multiplexing the multiplex optical signal of the first wavelength band and the multiplex optical signal of the second wavelength band amplified by the first optical amplifier and the second optical amplifier, respectively, so as to output the multiplex optical signal of the first wavelength band and the multiplex optical signal of the second wavelength band.

According to the present invention, the multiplex optical signals of the first and second wavelength bands propagated through the first and second transmission lines can be supplied to the corresponding first and second common optical amplifiers according to the wavelength bands, and can be multiplexed after being amplified by the corresponding first and second common optical amplifiers.

Additionally, in the transmission device according to the present invention, the multiplex optical signal of the first wavelength band propagated through the first transmission line and the multiplex optical signal of the first wavelength band propagated through the second transmission line may be supplied into the first optical amplifier in opposite directions, and
the multiplex optical signal of the second wavelength band propagated through the first transmission line and the multiplex optical signal of the second wavelength band propagated through the second transmission line may be supplied into the second optical amplifier in opposite directions.

According to the present invention, the multiplex optical signals of the same wavelength band are supplied into the corresponding optical amplifier in opposite directions. This arrangement can reduce Raman crosstalk between the signals.

Additionally, in the transmission device according to the present invention, the multiplex optical signal of the first wavelength band and the multiplex optical signal of the second wavelength band may be transmitted to the transmission device in an identical direction through each of the first transmission line and the second transmission line,
the multiplex optical signal of the first wavelength band transmitted through the first transmission line and the multiplex optical signal of the first wavelength band transmitted through the second transmission line may be supplied into the first optical amplifier in opposite directions, and
the multiplex optical signal of the second wavelength band transmitted through the first transmission line and the multiplex optical signal of the second wavelength band transmitted through the second transmission line may be supplied into the second optical amplifier in opposite directions.

According to the present invention, even when the multiplex optical signals are transmitted to the transmission device through each transmission line in an identical direction, the multiplex optical signals of the same wavelength band can be supplied into the corresponding optical amplifier in opposite directions.

Additionally, in the transmission device according to the present invention, the first wavelength band in the first transmission line and the second transmission line may include channels of different wavelengths, and the second wavelength band in the first transmission line and the second transmission line may include channels of different wavelengths.

According to the present invention, each of the wavelength bands includes channels of different wavelengths. This arrangement can inhibit an occurrence of a nonlinear effect between the multiplex optical signals.

Additionally, the transmission device according to the present invention may further comprise:
an optical coupler provided on each of transmission lines transmitting one of the multiplex optical signal of the first wavelength band and the multiplex optical signal of the second wavelength band divided by the wavelength division multiplexing unit; and
a monitoring unit monitoring the one of the multiplex optical signal of the first wavelength band and the multiplex optical signal of the second wavelength band branched by the optical coupler.

According to the present invention, the monitoring unit monitors the input multiplex optical signal so as to manage an abnormal condition thereof.

Additionally, the transmission device according to the present invention may further comprise gain equalizers (94₁, 94₂) provided at a preceding stage and a subsequent stage of each of the first optical amplifier and the second optical amplifier.

According to the present invention, a synthesized characteristic of the gain equalizers provided at the preceding and subsequent stages can equalize a gain wavelength characteristic of the optical amplifier.

Additionally, in the transmission device according to the present invention, each of the first optical amplifier and the second optical amplifier may comprise two optical amplification mediums, and a gain equalizer placed therebetween.

According to the present invention, providing the gain equalizer having a loss wavelength characteristic similar to a gain wavelength characteristic obtained by the two optical amplification mediums can equalize the gain wavelength characteristic.

Additionally, in the transmission device according to the present invention, each of the first optical amplifier and the second optical amplifier may comprise two optical amplification mediums supplied with excitation lights from inside between the two optical amplification mediums.

According to the present invention, supplying the excitation lights to the two optical amplification mediums outwardly from inside therebetween prevents a leakage of the excitation lights which would occur when one optical amplifier is excited from both forward and backward.

Additionally, in the transmission device according to the present invention, a drive current driving an excitation laser diode supplying an excitation light to each of the first optical amplifier and the second optical amplifier may be controlled such that optical output power levels of output multiplex optical signals of either of the first wavelength band and the second wavelength band make a constant sum.

According to the present invention, controlling the drive current driving the excitation laser diode can stabilize the sum of the optical output power levels.

Other objects, features and advantages of the present invention will become more apparent from the following detailed description when read in conjunction with the accompanying drawings.

### BRIEF DESCRIPTION OF THE DRAWINGS

FIG.1 is a diagram of an example of a WDM (wavelength division multiplexing) optical amplification repeating device;
FIG.2 is a diagram of another example of the WDM optical amplification repeating device;
FIG.3 is a graph representing wavelength bands of input optical signals;
FIG.4 is a diagram of a transmission device according to a first embodiment of the present invention;
FIG.5 are graphs illustrating alternate arrangements of wavelength bands of input optical signals supplied to the transmission device shown in FIG.4;
FIG.6 is a diagram of a transmission device according to a second embodiment of the present invention;
FIG.7 is a diagram of a transmission device according to a third embodiment of the present invention;
FIG.8 is a diagram of a transmission device according to a fourth embodiment of the present invention;
FIG.9 is a diagram of a transmission device according to a fifth embodiment of the present invention;
FIG.10 is a diagram of a transmission device according to a sixth embodiment of the present invention;
FIG.11 is a diagram of a transmission device according to a seventh embodiment of the present invention;
FIG.12 illustrates the transmission devices according to the first to fourth embodiments connected with positive dispersion fibers and a negative dispersion fiber;
FIG.13 illustrates the transmission devices according to the fifth to seventh embodiments connected with a positive dispersion fiber and a negative dispersion fiber;
FIG.14 is a diagram of a transmission device in which optical couplers used for distributed Raman amplifications are provided on a dispersion management transmission line;
FIG.15 is a diagram of a transmission device comprising monitoring photodiodes;
FIG.16 illustrates an example of modularization of the transmission device shown in FIG.6;
FIG.17 is a perspective view of an optical module shown in FIG.16;
FIG.18 illustrates an example of modularization of the transmission device shown in FIG.7;
FIG.19 is a perspective view of an optical module shown in FIG.18;
FIG.20 is a diagram of an optical amplifier comprising pump laser diodes;
FIG.21 is a diagram of an optical amplifier comprising PM-CPLs (polarized-wave couplers) and pump laser diodes;
FIG.22 is a diagram of an optical amplifier comprising pump laser diodes;
FIG.23 is a diagram of an optical amplifier comprising polarized-wave couplers and pump laser diodes;
FIG.24 is a diagram of an optical amplifier comprising pump laser diodes;
FIG.25 is a diagram of an optical amplifier comprising polarized-wave couplers and pump laser diodes;
FIG.26 is a diagram of an optical amplifier comprising gain equalizers provided at a preceding stage and a subsequent stage of an optical amplification medium;
FIG.27 is a diagram of an optical amplifier comprising gain equalizers symmetrically;
FIG.28 is a diagram of an optical amplifier comprising a gain equalizer between two optical amplification mediums;
FIG.29 is a diagram of a transmission device controlling drive currents driving pump laser diodes; and
FIG.30 is a diagram of a transmission device processing a multiple-wavelength signal including three wavelength bands.

### DETAILED DESCRIPTION OF THE PREFERRED EMBODIMENTS

Description will now be given, with reference to the drawings, of embodiments according to the present invention.

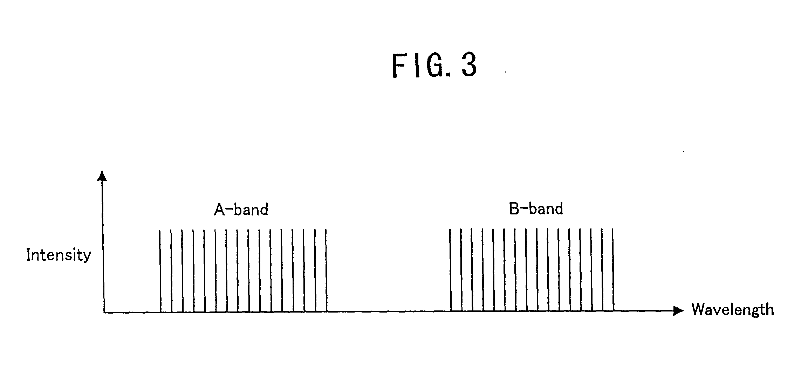

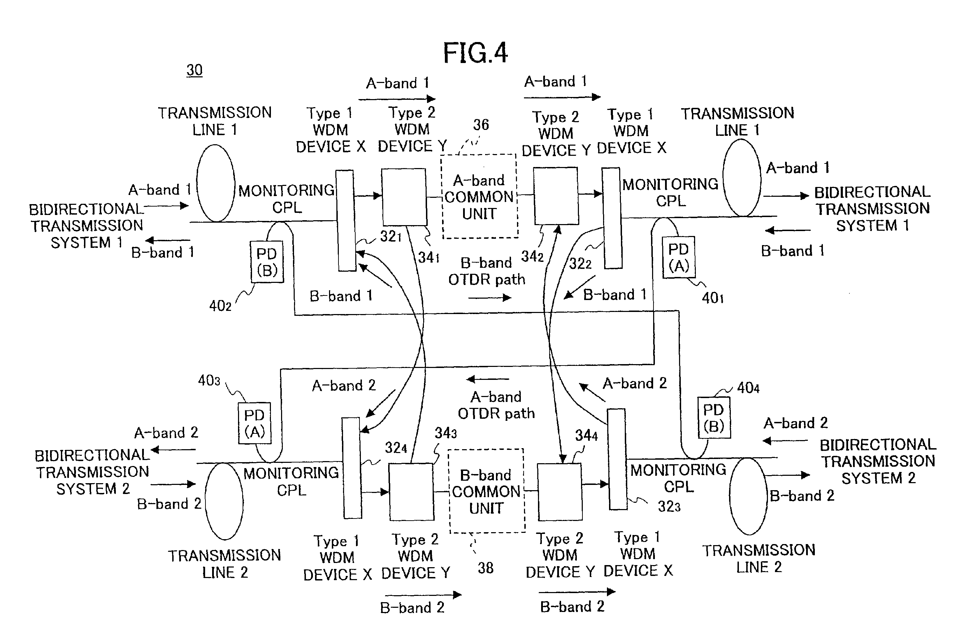

First, a description will be given of a first embodiment of the present invention. FIG.3 is a graph representing input optical signals. In FIG.3, the axis of abscissas indicates wavelength bands, and the axis of ordinates indicates optical intensities. As shown in FIG.3, the input optical signals comprise signals A-band and B-band of different wavelength bands. These optical signals are supplied to a transmission device 30 shown in FIG.4. As shown in FIG.4, the transmission device 30 comprises wavelength division multiplexing (WDM) devices X 32₁, 32₂, 32₃ and 32₄, WDM devices Y 34₁, 34₂, 34₃ and 34₄, an A-band common unit 36, a B-band common unit 38, and photodiodes 40₁, 40₂, 40₃ and 40₄ used for monitoring an OTDR (Optical Time Domain Reflectmeter) signal. Additionally, there are two transmission systems: multiplex wave signals A-band 1 and B-band 1 are propagated thorough a transmission system 1, and multiplex wave signals A-band 2 and B-band 2 are propagated thorough a transmission system 2. Each pair of the multiplex wave signals A-band and B-band are propagated in opposite directions through respective transmission lines thereof. Besides, "CPL" in FIG.4 represents an optical coupler. In addition, embodiments to be described hereinafter also set forth A-band common units and B-band common units which include optical amplifiers. An erbium-doped optical fiber amplifier and a lumped-constant Raman optical amplifier may be used as the optical amplifiers.

Herein, a description will be given of specific signal transmittances in the transmission device 30 structured as above. In the transmission system 1, the multiplex wave signal A-band 1 supplied to the transmission device 30 is transmitted through the WDM device X 32₁ and the WDM device Y 34₁, and is amplified by the A-band common unit 36. Then, the multiplex wave signal A-band 1 is transmitted through the WDM device Y 34₂ and the WDM device X 32₂, and is output from the transmission device 30. On the other hand, the multiplex wave signal B-band 1 supplied to the transmission device 30 is transmitted from the WDM device X 32₂ provided in the transmission system 1 to the WDM device Y 34₄ provided in the transmission system 2. Then, the multiplex wave signal B-band 1 is amplified by the B-band common unit 38, and is transmitted from the WDM device Y 34₃ provided in the transmission system 2 to the WDM device X 32₁ provided in the transmission system 1, and is output from the transmission device 30. In the transmission system 2, the multiplex wave signal B-band 2 supplied to the transmission device 30 is transmitted through the WDM device X 32₄ and the WDM device Y 34₃, and is amplified by the B-band common unit 38. Then, the multiplex wave signal B-band 2 is transmitted through the WDM device Y 34₄ and the WDM device X 32₃, and is output from the transmission device 30. On the other hand, the multiplex wave signal A-band 2 supplied to the transmission device 30 is transmitted from the WDM device X 32₃ provided in the transmission system 2 to the WDM device Y 34₂ provided in the transmission system 1. Then, the multiplex wave signal A-band 2 is amplified by the A-band common unit 36, and is transmitted from the WDM device Y 34₁ provided in the transmission system 1 to the WDM device X 32₄ provided in the transmission system 2, and is output from the transmission device 30.

As described above, the multiplex wave signals A-band and B-band divided by the respective WDM devices X are transmitted via the respective WDM devices Y into the A-band common unit 36 and the B-band common unit 38, respectively, in the opposite directions. Accordingly, two multiplex wave signals derived from two different transmission systems are amplified by one common (optical amplifier) unit. Therefore, one optical amplifier suffices for each of wavelength bands.

In addition, in the above-described optical signal transmittances, the signals A-band and B-band supplied to the transmission system 1 and 2 are propagated in opposite directions through the respective transmission lines. This arrangement can inhibit an occurrence of a nonlinear effect, and can also reduce Raman crosstalk between the signals.

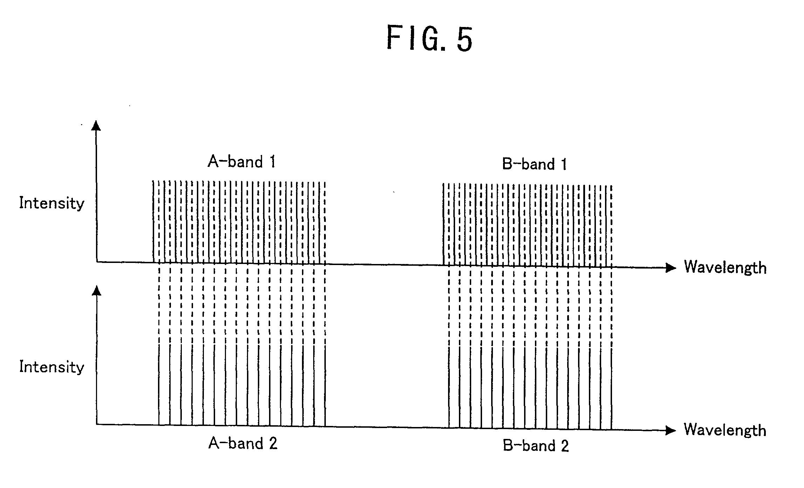

Further, as shown in FIG.5, the multiplex wave signals A-band 1 and A-band 2, and the multiplex wave signals B-band 1 and B-band 2 are arranged alternately in terms of wavelength bands. In each of graphs shown in FIG.5, the axis of abscissas indicates wavelength bands, and the axis of ordinates indicates optical intensities, as in FIG.3. Wavelength bands (channels) of A-band 2 and B-band 2 shown in the lower graph are alternated with wavelength bands (channels) of the multiplex wave signals A-band 1 and B-band 1 shown in the upper graph, respectively. This arrangement reduces an ASE power, compared to a simple unidirectional optical amplification.

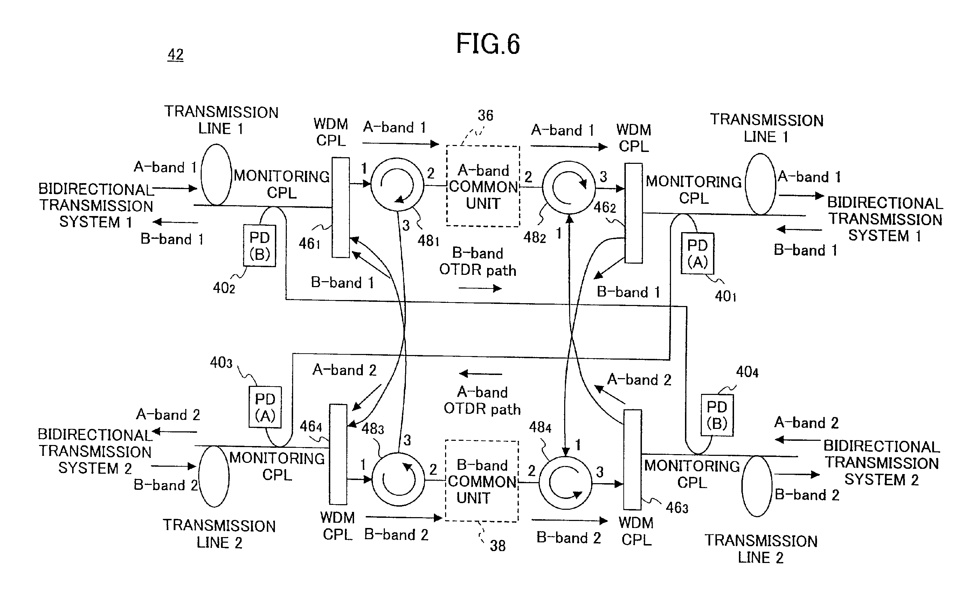

Next, a description will be given of a second embodiment of the present invention. This second embodiment is a variation of the above-described first embodiment which replaces only the WDM devices, as shown in FIG.6. Specifically, a transmission device 42 according to the present second embodiment comprises WDM couplers 46₁, 46₂, 46₃ and 46₄ in place of the WDM devices X, and optical circulators 48₁, 48₂, 48₃ and 48₄ in place of the WDM devices Y. In the present second embodiment, optical signal transmittances are the same as in the first embodiment. Thus, the arrangement according to the present second embodiment can inhibit an occurrence of a nonlinear effect, and can also reduce Raman crosstalk between the signals, as in the first embodiment.

In the present second embodiment, the optical circulator performs an isolation of a reflected light which is conventionally performed by an optical isolator. Thus, the optical circulator not only divides the signals A-band and B-band, but also performs the isolation.

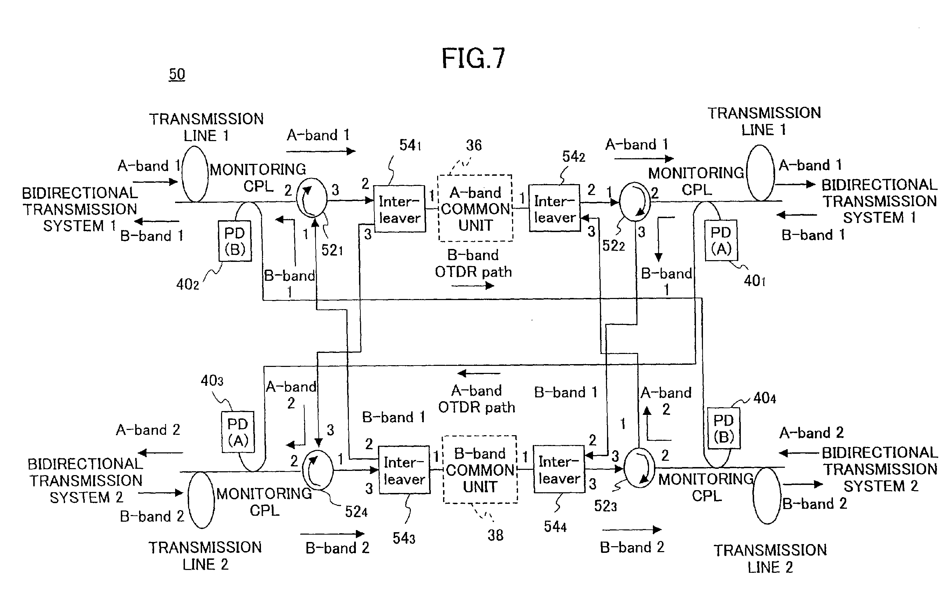

Next, a description will be given of a third embodiment of the present invention. This third embodiment is also a variation of the above-described first embodiment which replaces only the WDM devices, as shown in FIG.7. Specifically, a transmission device 50 according to the present third embodiment comprises optical circulators 52₁, 52₂, 52₃ and 52₄ in place of the WDM devices X, and interleavers 54₁, 54₂, 54₃ and 54₄ in place of the WDM devices Y. In the present third embodiment, optical signal transmittances are the same as in the first embodiment. Thus, the arrangement according to the present third embodiment can inhibit an occurrence of a nonlinear effect, and can also reduce Raman crosstalk between the signals, as in the first embodiment.

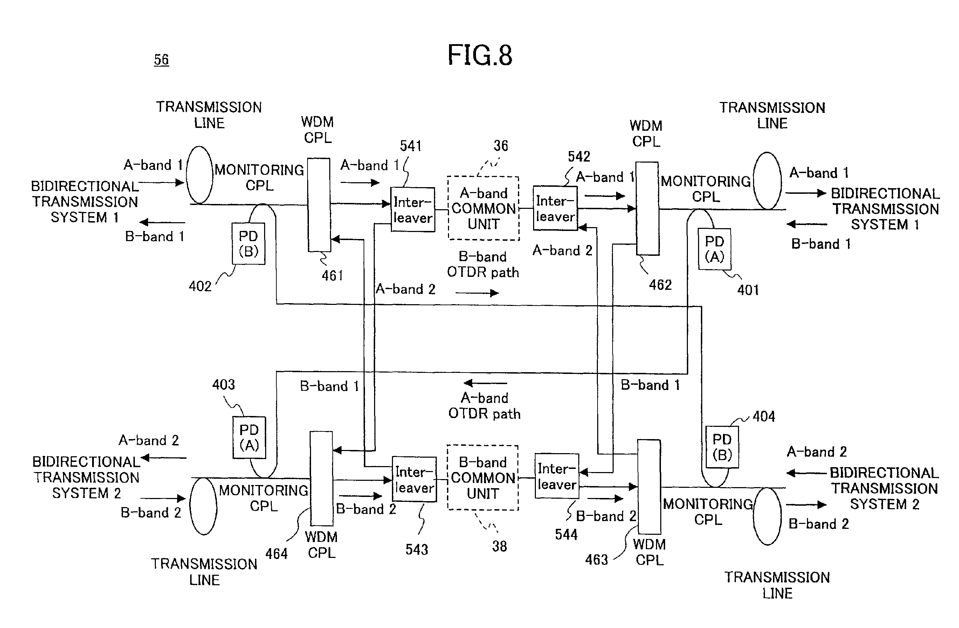

Next, a description will be given of a fourth embodiment of the present invention. This fourth embodiment is also a variation of the above-described first embodiment which replaces only the WDM devices, as shown in FIG.8. Specifically, a transmission device 56 according to the present fourth embodiment comprises the WDM couplers 46₁, 46₂, 46₃ and 46₄ in place of the WDM devices X, and the interleavers 54₁, 54₂, 54₃ and 54₄ in place of the WDM devices Y. In the present fourth embodiment, optical signal transmittances are the same as in the first embodiment. Thus, the arrangement according to the present fourth embodiment can inhibit an occurrence of a nonlinear effect, and can also reduce Raman crosstalk between the signals, as in the first embodiment.

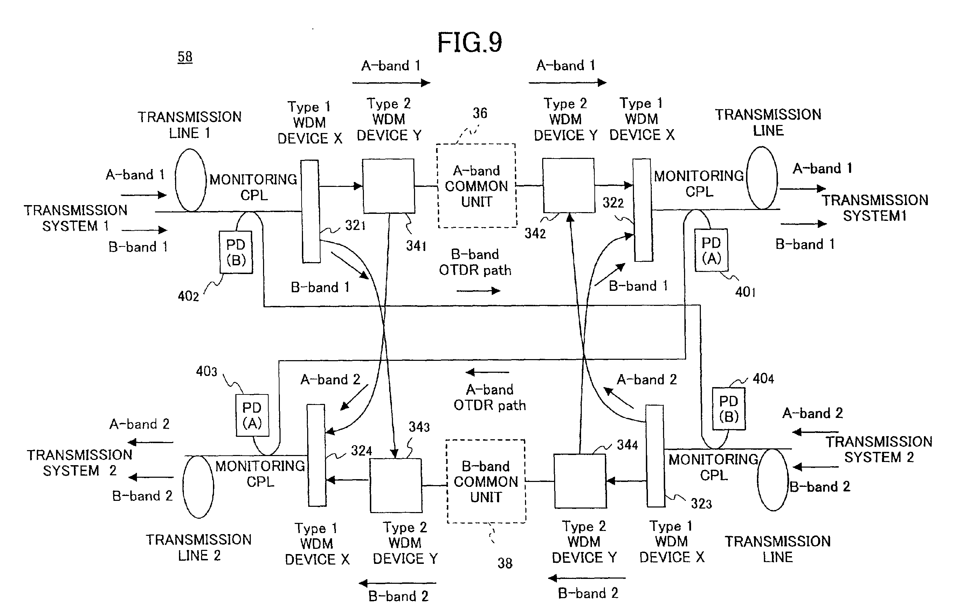

Next, a description will be given of a fifth embodiment of the present invention. In the present fifth embodiment, the multiplex wave signals A-band and B-band are supplied in an identical direction in each of the transmission systems 1 and 2, not in opposite directions as in the above-described first to fourth embodiments. FIG.9 is a diagram of a transmission device 58 according to the present fifth embodiment.

Input optical signals are the multiplex wave signals A-band and B-band of different wavelength bands, as in the above-described first to fourth embodiments. These optical signals are supplied to the transmission device 58. As shown in FIG.9, the transmission device 58 comprises the wavelength division multiplexing (WDM) devices X 32₁, 32₂, 32₃ and 32₄, the WDM devices Y 34₁, 34₂, 34₃ and 34₄, the A-band common unit 36, the B-band common unit 38, and the photodiodes 40₁, 40₂, 40₃ and 40₄. Additionally, there are also two transmission systems: the multiplex wave signals A-band 1 and B-band 1 are propagated thorough the transmission system 1, and the multiplex wave signals A-band 2 and B-band 2 are propagated thorough the transmission system 2. Each pair of the multiplex wave signals A-band and B-band are propagated in an identical direction through the respective transmission lines thereof.

Herein, a description will be given of specific signal transmittances in the transmission device 58 structured as above. In the transmission system 1, the multiplex wave signal A-band 1 and the multiplex wave signal B-band 1 supplied to the transmission device 58 are divided by the WDM device X 32₁. Then, the multiplex wave signal A-band 1 is transmitted through the WDM device Y 34₁, and is amplified by the A-band common unit 36. Then, the multiplex wave signal A-band 1 is transmitted through the WDM device Y 34₂, and is multiplexed with the amplified multiplex wave signal B-band 1 by the WDM device X 32₂ so as to be output from the transmission device 58.

On the other hand, the multiplex wave signal B-band 1 divided from the multiplex wave signal A-band 1 by the WDM device X 32₁ is transmitted through the WDM device Y 34₃ provided in the transmission system 2, and is amplified by the B-band common unit 38. Then, the multiplex wave signal B-band 1 is transmitted from the WDM device Y 34₄ provided in the transmission system 2 to the WDM device X 32₂ provided in the transmission system 1, and is multiplexed with the amplified multiplex wave signal A-band 1 by the WDM device X 32₂ so as to be output from the transmission device 58.

In the transmission system 2, the multiplex wave signal A-band 2 and the multiplex wave signal B-band 2 supplied to the transmission device 58 are divided by the WDM device X 32₃. Then, the multiplex wave signal B-band 2 is transmitted through the WDM device Y 34₄, and is amplified by the B-band common unit 38. Then, the multiplex wave signal B-band 1 is transmitted through the WDM device Y 34₃, and is multiplexed with the amplified multiplex wave signal A-band 2 by the WDM device X 32₄ so as to be output from the transmission device 58.

On the other hand, the multiplex wave signal A-band 2 divided from the multiplex wave signal B-band 2 by the WDM device X 32₃ is transmitted through the WDM device Y 34₂ provided in the transmission system 1, and is amplified by the A-band common unit 36. Then, the multiplex wave signal A-band 2 is transmitted from the WDM device Y 34₁ provided in the transmission system 1 to the WDM device X 32₄ provided in the transmission system 2, and is multiplexed with the amplified multiplex wave signal B-band 2 by the WDM device X 32₄ so as to be output from the transmission device 58.

In the above-described optical signal transmittances according to the present fifth embodiment, the signals A-band or B-band supplied to the transmission system 1 and 2 are propagated in opposite directions, as in the first embodiment, when transmitted through the A-band common unit 36 or the B-band common unit 38. This arrangement can inhibit an occurrence of a nonlinear effect, and can also reduce Raman crosstalk between the signals.

As described above, even when the signals are supplied in an identical direction to each of the transmission systems 1 and 2, the WDM devices are used so that the signals A-band or B-band supplied to the transmission system 1 and 2 can be propagated in opposite directions through the respective transmission lines.

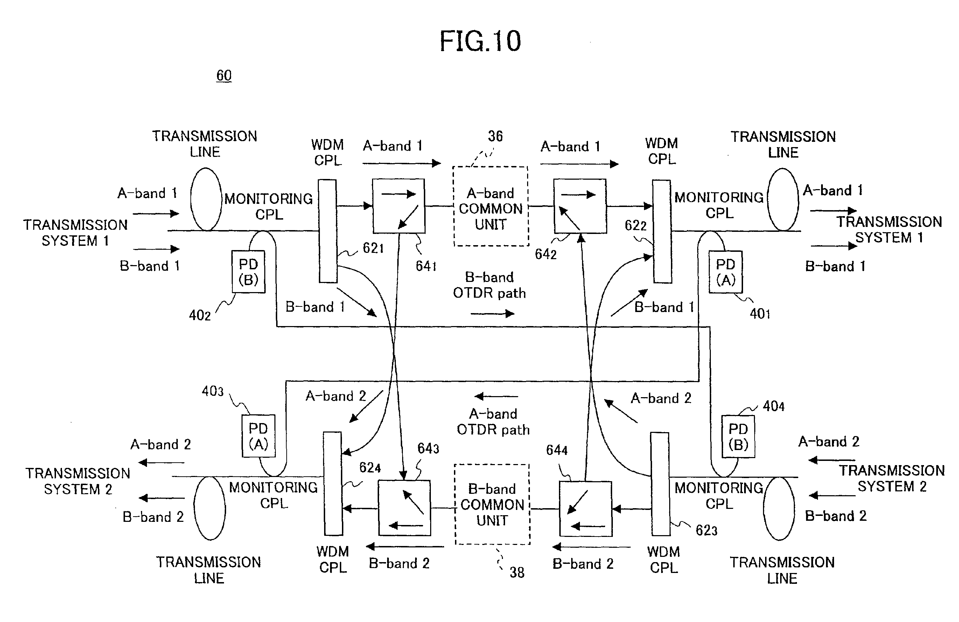

Next, a description will be given of a sixth embodiment of the present invention. This sixth embodiment is a variation of the above-described fifth embodiment which replaces only the WDM devices, as shown in FIG.10. Specifically, a transmission device 60 according to the present sixth embodiment comprises WDM couplers 62₁, 62₂, 62₃ and 62₄ in place of the WDM devices X, and circulators 64₁, 64₂, 64₃ and 64₄ in place of the WDM devices Y. In the present sixth embodiment, optical signal transmittances are the same as in the fifth embodiment. Thus, the arrangement according to the present sixth embodiment can inhibit an occurrence of a nonlinear effect, and can also reduce Raman crosstalk between the signals, as in the fifth embodiment.

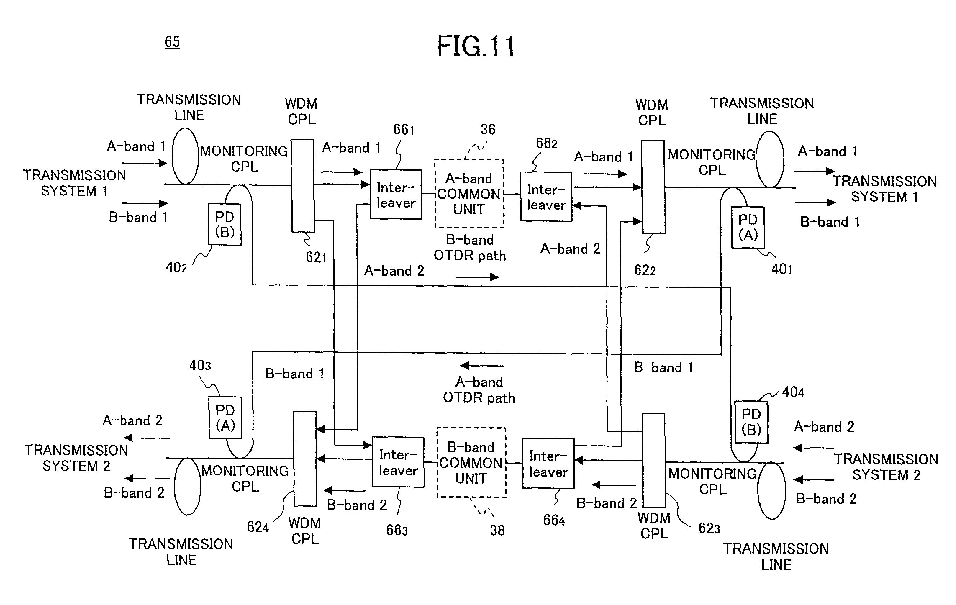

Next, a description will be given of a seventh embodiment of the present invention. This seventh embodiment is also a variation of the above-described fifth embodiment which replaces only the WDM devices, as shown in FIG.11. Specifically, a transmission device 65 according to the present seventh embodiment comprises the WDM couplers 62₁, 62₂, 62₃ and 62₄ in place of the WDM devices X, and interleavers 66₁, 66₂, 66₃ and 66₄ in place of the WDM devices Y. In the present seventh embodiment, optical signal transmittances are the same as in the fifth embodiment. Thus, the arrangement according to the present seventh embodiment can inhibit an occurrence of a nonlinear effect, and can also reduce Raman crosstalk between the signals, as in the fifth embodiment.

Next, a description will be given of common features of the above-described seven embodiments.

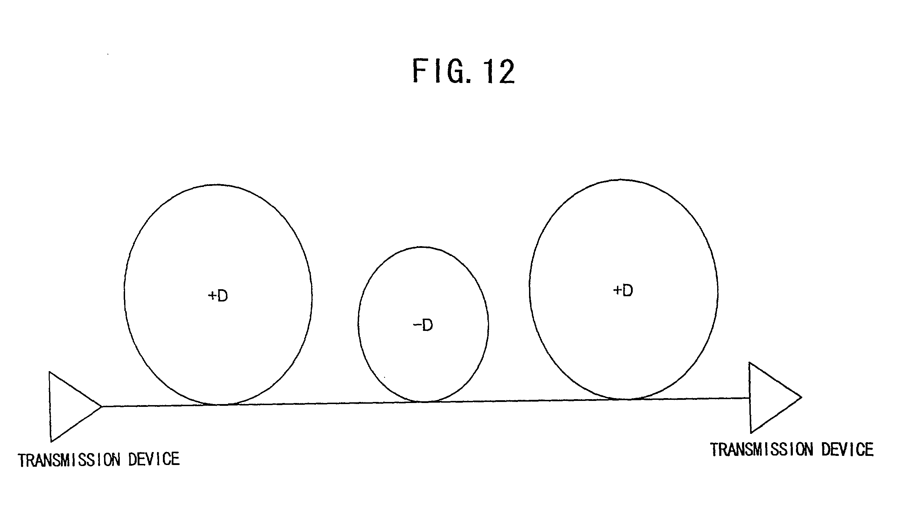

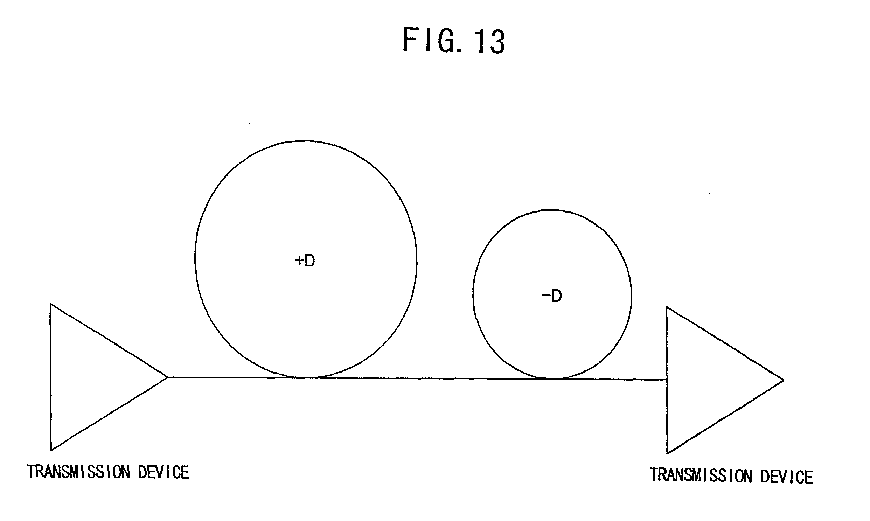

Firstly, the transmission devices of the above-described first to fourth embodiments are interconnected by optical fibers as shown in FIG.12. In FIG.12, the transmission devices are connected with positive dispersion fibers that are interconnected by a negative dispersion fiber. This dispersion management transmission line can suppress an occurrence of a nonlinear effect. As to the above-described fifth to seventh embodiments, the transmission devices are interconnected as shown in FIG.13. In FIG.13, a positive dispersion fiber is connected to an output end of each transmission device, and a negative dispersion fiber is connected to an input end of each transmission device so as to suppress an occurrence of a nonlinear effect.

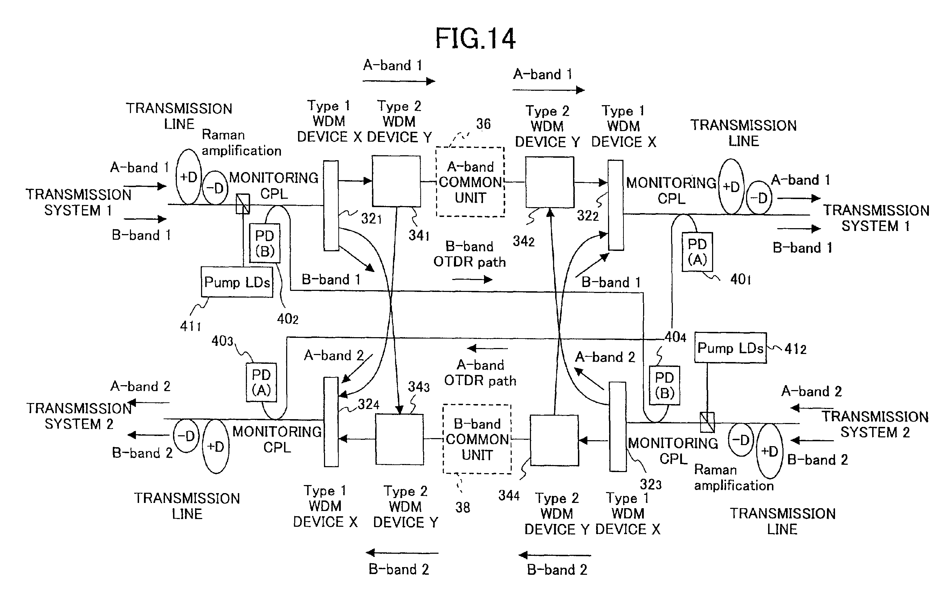

FIG.14 is a diagram of a transmission device in which optical couplers used for distributed Raman amplifications, and pump (excitation) laser diodes 41₁ and 41₂ are provided on the above-mentioned dispersion management transmission line. In this structure, an excitation light is supplied via these elements to Raman amplification media. Thus, an optical signal can be amplified by distributed Raman amplifications in a transmission line.

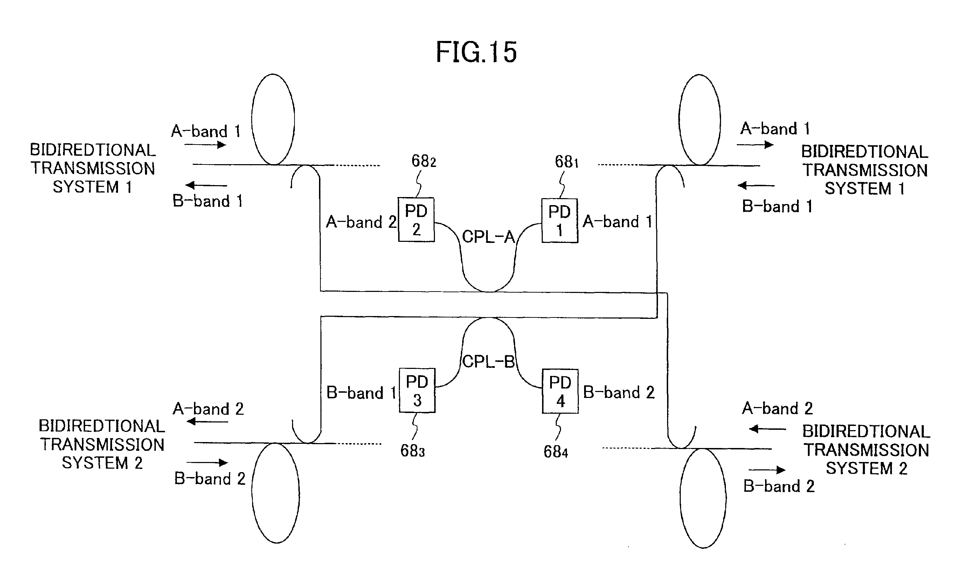

Next, a description will be given of monitoring optical couplers. An optical coupler is provided between photodiodes so as to monitor an input optical level. For example in FIG.4, an optical coupler is provided between the photodiodes 40₂ and 40₄. Further, as shown in FIG.15, an optical coupler CPL-A and an optical coupler CPL-B are provided so that input optical levels can be monitored by using monitoring photodiodes (monitoring units) 68₁, 68₂, 68₃ and 68₄ in respective directions.

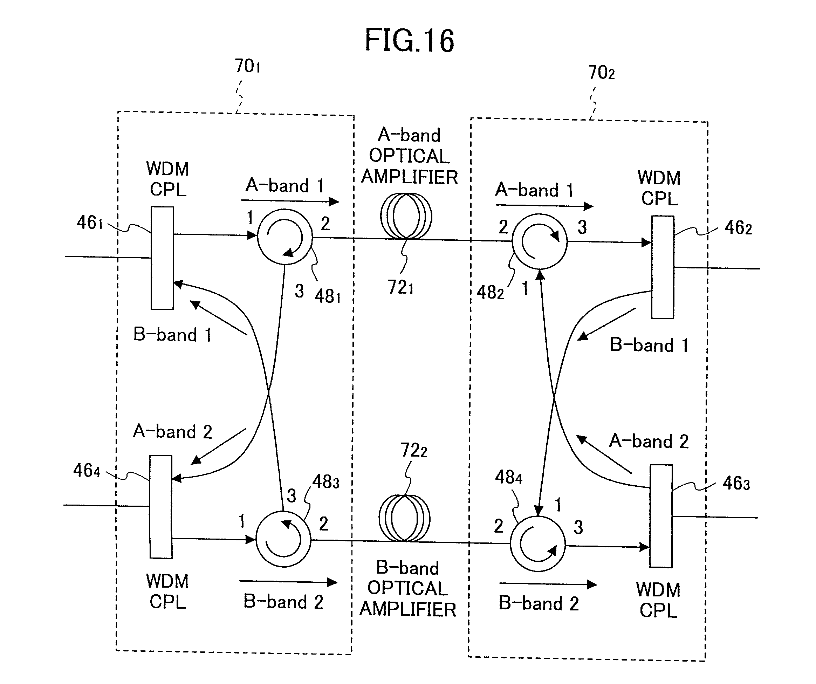

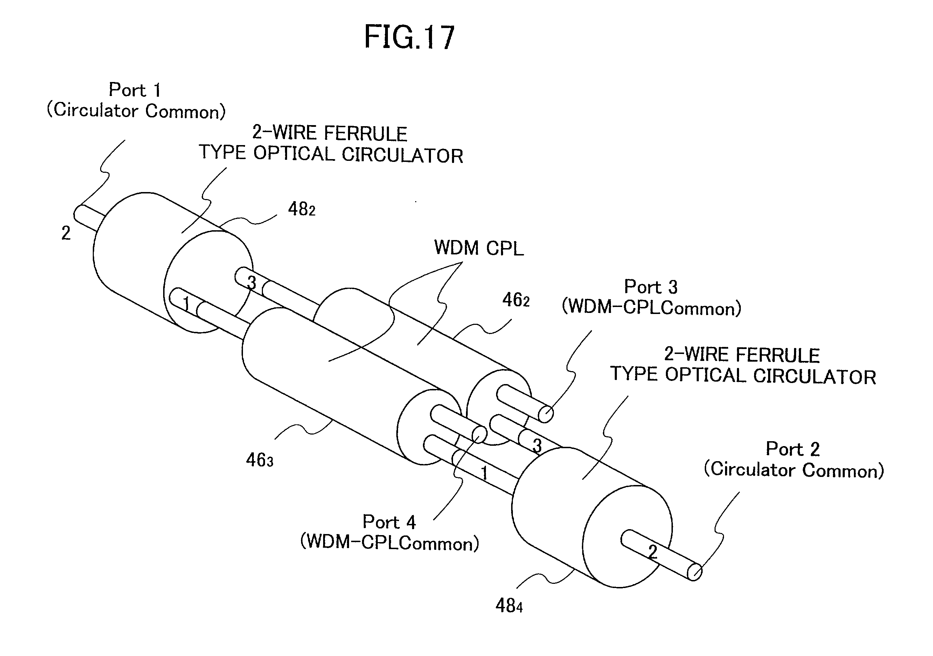

Next, a description will be given of modularization of the optical device for decreasing a number of components. FIG.16 is an example of modularization of the optical transmission device shown in FIG.6. Elements in FIG.16 that are identical or equivalent to the elements shown in FIG.6 are referenced by the same reference marks. In FIG.16, optical modules 70₁ and 70₂ are enclosed by dotted lines. The optical module 70₁ comprises the WDM couplers 46₁ and 46₄, and the optical circulators 48₁ and 48₃. The optical module 70₂ comprises the WDM couplers 46₂ and 46₃, and the optical circulators 48₂ and 48₄. These two optical modules 70₁ and 70₂, an A-band optical amplifier 72₁ (corresponding to the A-band common unit in FIG.6) and a B-band optical amplifier 72₂ (corresponding to the B-band common unit in FIG.6) can form the transmission device shown in FIG.6. FIG.17 is a perspective view of the optical module 70₂. In FIG.17, a port 1 of the optical circulator 48₂ is connected to the A-band optical amplifier 72₁. A port 2 of the optical circulator 48₄ is connected to the B-band optical amplifier 72₂. A port 3 and a port 4 of the WDM couplers 46₂ and 46₃, respectively, are optical fibers for inputting and outputting optical signals to and from the transmission device.

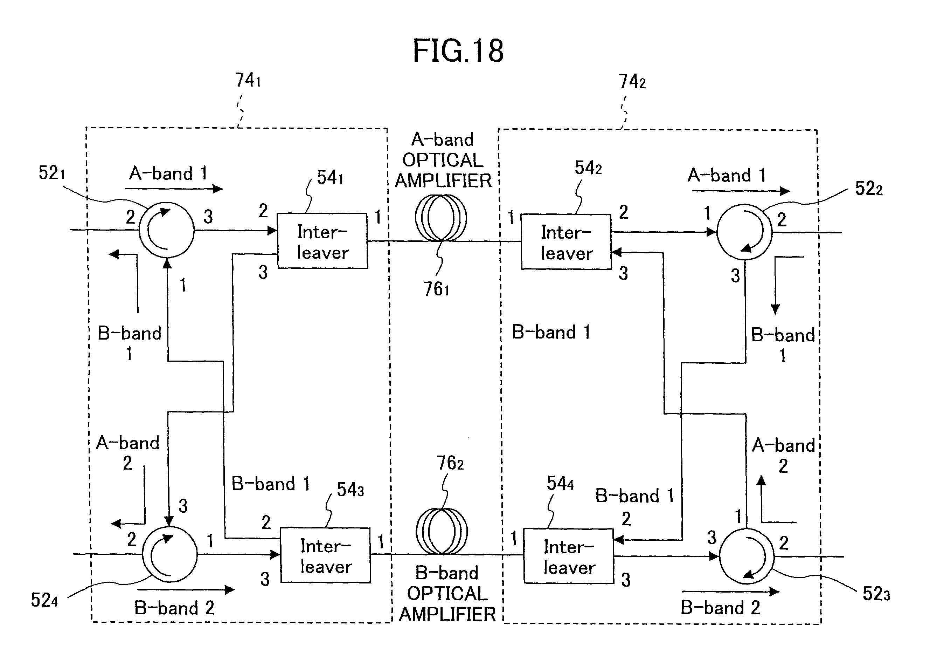

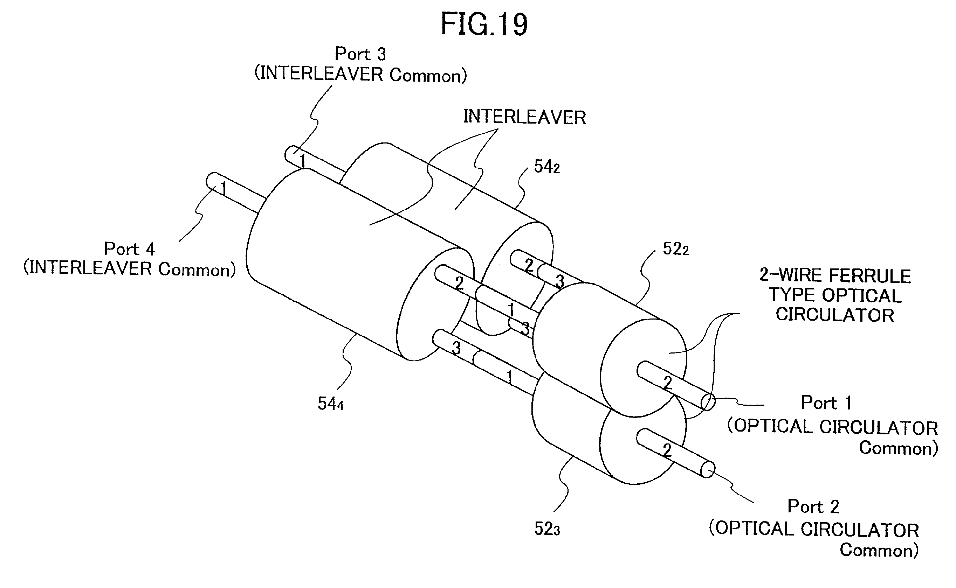

FIG.18 is an example of modularization of the optical transmission device shown in FIG.7. Elements in FIG.18 that are identical or equivalent to the elements shown in FIG.7 are referenced by the same reference marks. In FIG.18, optical modules 74₁ and 74₂ are enclosed by dotted lines. The optical module 74₁ comprises the optical circulators 52₁ and 52₄, and the interleavers 54₁ and 54₃. The optical modules 74₂ comprises the optical circulators 52₂ and 52₃, and the interleavers 54₂ and 54₄. These two optical modules 74₁ and 74₂, an A-band optical amplifier 76₁ (corresponding to the A-band common unit in FIG.7) and a B-band optical amplifier 76₂ (corresponding to the B-band common unit in FIG.7) can form the transmission device shown in FIG.7. FIG.19 is a perspective view of the optical module 74₂. In FIG.19, a port 4 of the interleaver 54₄ is connected to the B-band optical amplifier 76₂. A port 3 of the interleaver 54₂ is connected to the A-band optical amplifier 76₁. A port 1 and a port 2 of the optical circulators 52₂ and 52₃, respectively, are optical fibers for inputting and outputting optical signals to and from the transmission device. As described above, modularizing the optical device can decrease the number of components.

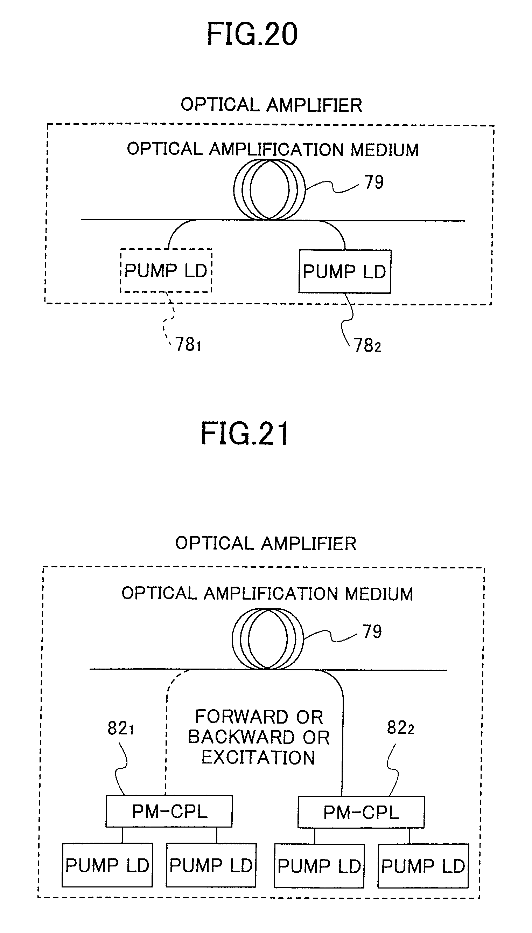

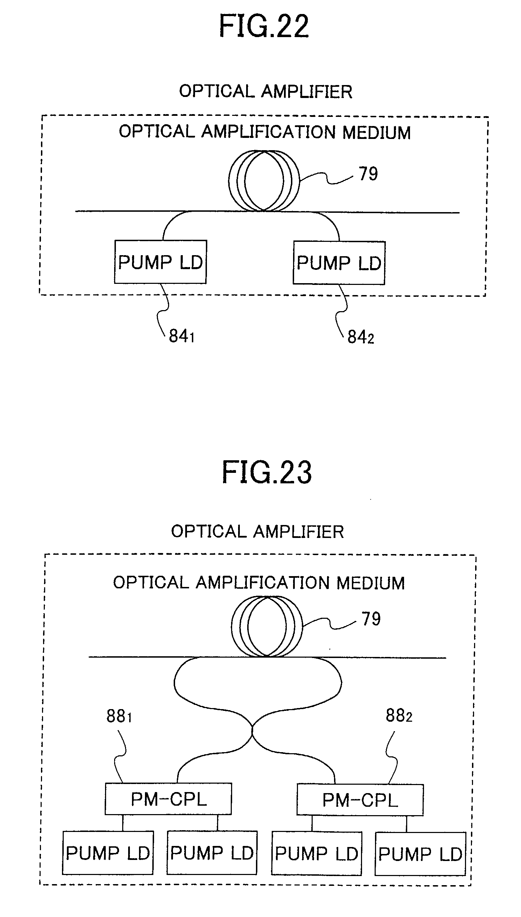

Next, a description will be given of methods of supplying an excitation light in the optical amplifier. FIG.20 and FIG.21 illustrate examples where an excitation light is supplied from either forward or backward of an optical amplification medium 79. FIG.22 and FIG.23 illustrate examples where excitation lights are supplied from both forward and backward of the optical amplification medium 79. In FIG.20, not a pump laser diode (LD) 78₁ squared by a broken line, but a pump laser diode (LD) 78₂ squared by a solid line supplies an excitation light. In FIG.21, an excitation light is supplied to the optical amplification medium 79, not from a PM-CPL (a polarized-wave coupler) 82₁ as indicated by a broken line extended therefrom, but from a PM-CPL 82₂ as indicated by a solid line extended therefrom. Each of the PM-CPL 82₁ and the PM-CPL 82₂ orthogonalizes polarized waves of two light sources (pump LDs) so as to double the light sources and eliminate a polarization dependency.

In FIG.22, both pump laser diodes (LDs) 84₁ and 84₂ squared by solid lines supply excitation lights. In FIG.23, excitation lights are supplied to the optical amplification medium 79 from both PM-CPLs 88₁ and 88₂ as indicated by solid lines extended therefrom.

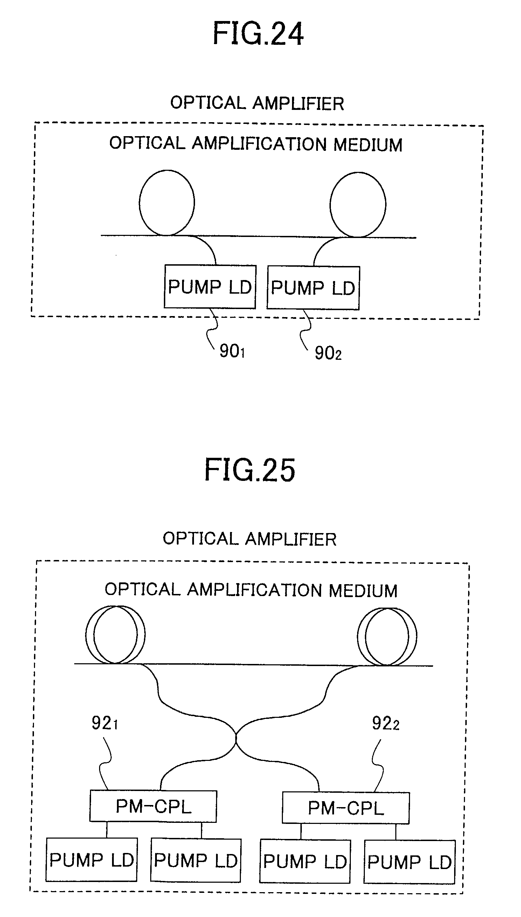

Next, a description will be given, with reference to FIG.24 and FIG.25, of examples of supplying an excitation light from inside. In each of these examples, optical fibers (optical amplification mediums) are separately amplified and excited from inside therebetween. In FIG.24, both pump laser diodes (LDs) 90₁ and 90₂ supply excitation lights to the optical fibers from inside therebetween. In FIG.25, excitation lights are supplied from both PM-CPLs 92₁ and 92₂ to the optical fibers from inside therebetween. Exciting the optical fibers from both forward and backward thereof may cause the excitation lights to leak such that PM-CPLs exert adverse effects on each other. To reduce these adverse effects, the PM-CPLs 92₁ and 92₂ excite the optical fibers outwardly from inside therebetween.

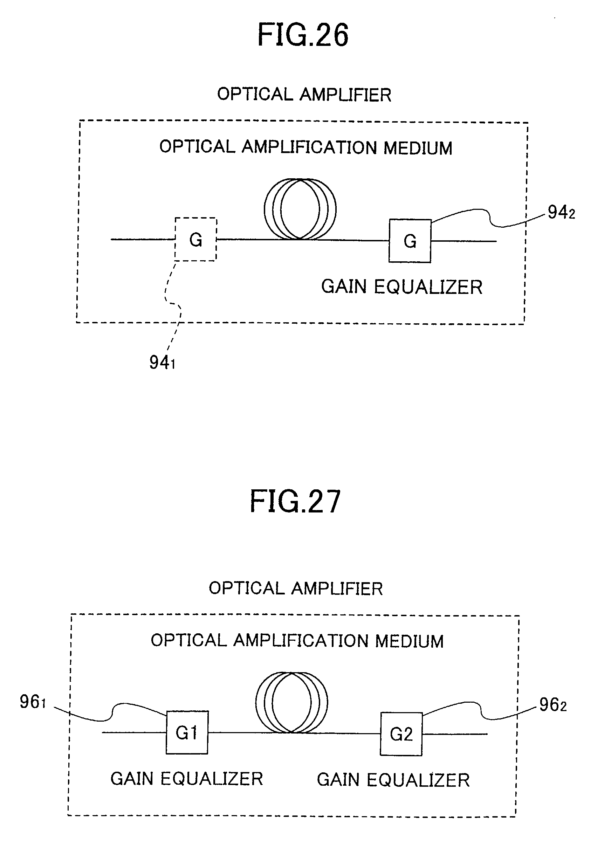

Next, a description will be given, with reference to FIG.26, FIG.27 and FIG.28, of using a gain equalizer in the optical amplifier so as to level a wavelength characteristic. This gain equalizer has a loss wavelength characteristic similar to a gain wavelength characteristic obtained by an optical amplification medium. FIG.26 shows an optical amplifier comprising gain equalizers 94₁ and 94₂ provided at a preceding stage and a subsequent stage of an optical amplification medium. In FIG.26, not the gain equalizer 94₁ squared by a broken line, but the gain equalizer 94₂ squared by a solid line equalizes a gain. Either of the gain equalizers 94₁ and 94₂ is used depending on a direction in which optical signals are supplied.

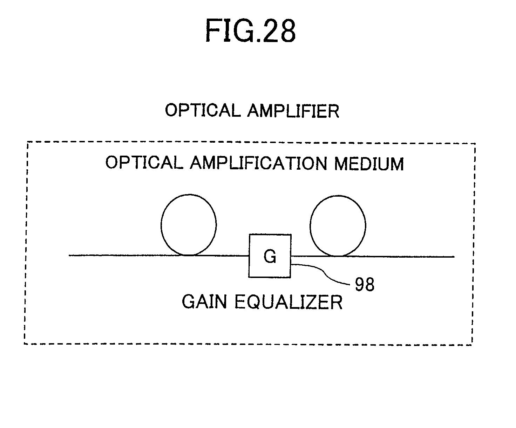

FIG.27 shows an optical amplifier comprising gain equalizers 96₁ and 96₂ symmetrically so as to balance a gain equalization by using both the gain equalizers 96₁ and 96₂. These gain equalizers 96₁ and 96₂ have different loss wavelengths, and both the gain equalizers 96₁ and 96₂ together equalize a gain wavelength characteristic of the optical amplifier by using a synthesized characteristic of both the gain equalizers 96₁ and 96₂. In addition, FIG.28 shows an optical amplifier comprising a gain equalizer 98 placed between two optical amplification mediums. This gain equalizer 98 has a loss wavelength characteristic similar to a gain wavelength characteristic obtained by the two optical amplification mediums.

A long-period fiber grating filter, a slant-type fiber grating filter, a filter using a Faraday rotator, etc. may be used as these gain equalizers.

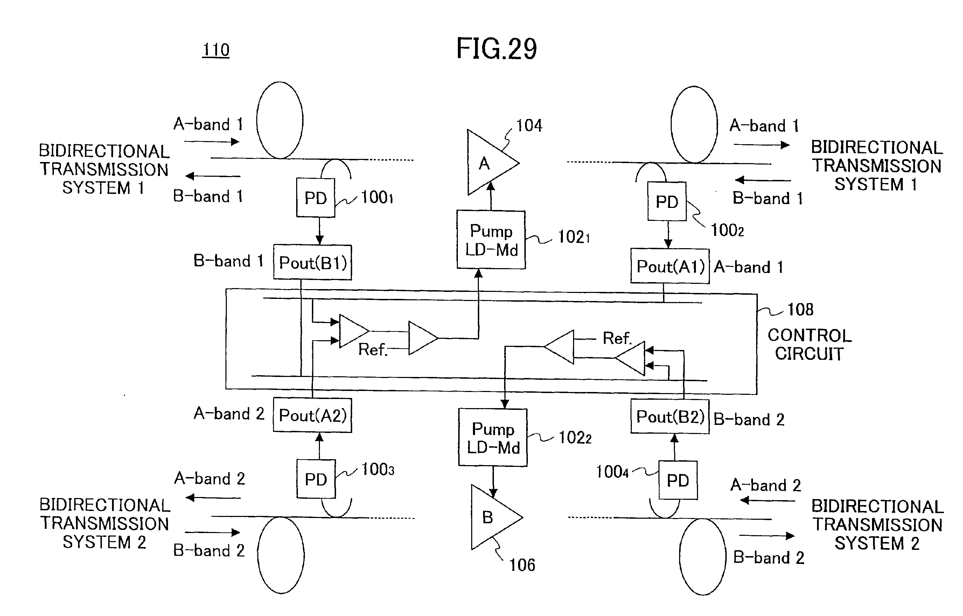

Next, a description will be given of controlling an excitation light. FIG.29 is a diagram of an optical repeating amplifier 110 having a function of controlling excitation lights. This optical repeating amplifier 110 comprises an A-band optical amplification medium 104 (corresponding to the A-band common unit 36), a B-band optical amplification medium 106 (corresponding to the B-band common unit 38), four photodiodes (PDs) 100₁, 100₂, 100₃ and 100₄, a control circuit 108, and two pump (excitation) laser diodes (LDs) 102₁ and 102₂ supplying excitation lights to the A-band optical amplification medium 104 and the B-band optical amplification medium 106, respectively. The control circuit 108 controls a drive current driving the pump laser diode 102₁ such that a power level of an optical output of A-band 1 monitored by the photodiode 100₂ and a power level of an optical output of A-band 2 monitored by the photodiode 100₃ make a constant sum. Similarly, the control circuit 108 controls a drive current driving the pump laser diode 102₂ such that a power level of an optical output of B-band 1 monitored by the photodiode 100₁ and a power level of an optical output of B-band 2 monitored by the photodiode 100₄ make a constant sum.

Additionally, the optical repeating amplifier 110 receives a monitor command by photoelectrically converting a monitor command optical signal of A-band, which is modulated at a predetermined frequency by another transmitter, by the photodiode 100₂ or 100₃, and thereafter extracting the monitor command optical signal by an electric band pass filter. In this course, the monitor command signal may be superimposed on the multiple-wavelength signal A-band. Alternately, the monitor command signal may have wavelengths different from the multiple-wavelength signal A-band such that the optical repeating amplifier 110 receives the monitor command signal by using an optical band pass filter extracting the wavelengths. The above-described monitor-command signal receiving methods are also applicable to the multiple-wavelength signal B-band. In this case, the monitor command optical signal of B-band is photoelectrically converted by the photodiode 100₁ or 100₄. Besides, the above-mentioned drive current driving the pump laser diode may be superimposed subordinately on a monitor response signal having a frequency different from the frequency of the monitor command signal such that the optical repeating amplifier transfers the monitor response signal to another receiver.

Next, a description will be given of arranging optical filters in the A-band common unit 36 and the B-band common unit 38 (from FIG.4 to FIG.9). A long-period fiber grating filter, a slant-type fiber grating filter, and a filter using a Faraday rotator may be used as the filters in this arrangement. These three filters have loss wavelength characteristics equal in forward and reverse directions, and exhibit such a large return loss as to dispense with other optical components for eliminating reflected lights. Therefore, using the above-mentioned three filters can reduce a number of components in the optical repeating amplifier.

Besides, upon returning the response signal, the optical amplifier modulates the excitation light sources. However, the gain equalizer does not have excitation light sources. Therefore, employing the filter using a Faraday rotator involves a utilization of a characteristic enabling a variable modulating by varying a current flowing in an electromagnet of the Faraday rotator.

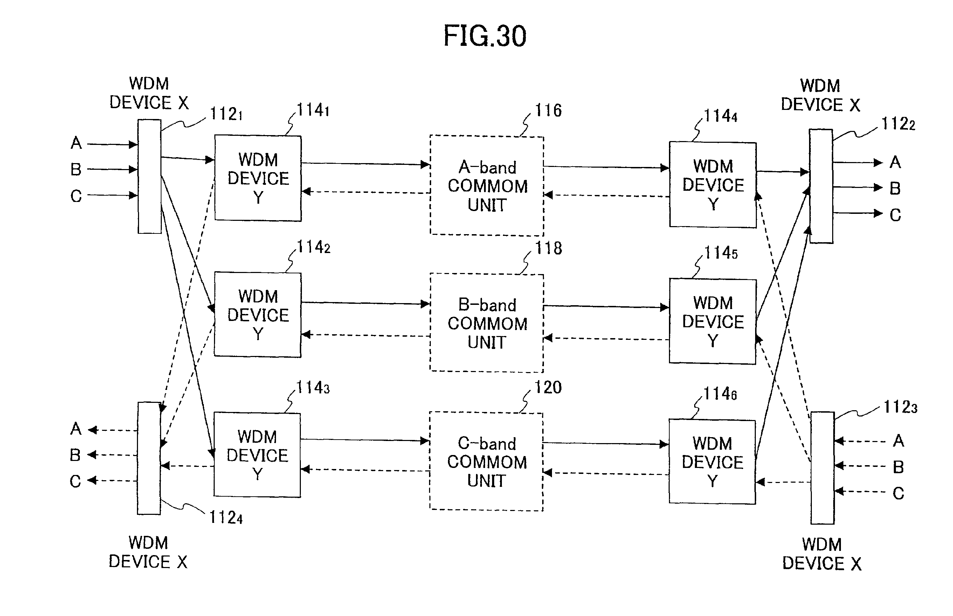

The above-described embodiments relate to the transmission devices processing the multiple-wavelength signal including two wavelength bands. However, the present invention is also applicable to a transmission device processing a multiple-wavelength signal including more than two wavelength bands. For example, FIG.30 is a diagram of a transmission device to which an input signal including three wavelength bands is supplied. In FIG.30, a multiple-wavelength signal including three wavelength bands A-band, B-band and C-band is divided into three signals A-band, B-band and C-band by a WDM device X 112₁. Then, the signal A-band is transmitted through a WDM device Y 114₁, and is amplified by an A-band common unit 116. Subsequently, the signal A-band is transmitted through a WDM device Y 114₄, and is multiplexed by a WDM device X 1122 so as to be output from the transmission device. The signal B-band is transmitted through a WDM device Y 114₂, and is amplified by a B-band common unit 118. Subsequently, the signal B-band is transmitted through a WDM device Y 114₅, and is multiplexed by the WDM device X 112₂ so as to be output from the transmission device. The signal C-band is transmitted through a WDM device Y 114₃, and is amplified by a C-band common unit 120. Subsequently, the signal C-band is transmitted through a WDM device Y 114₆, and is multiplexed by the WDM device X 112₂ so as to be output from the transmission device. A multiple-wavelength signal supplied in an opposite direction to a WDM device X 112₃ is processed in a converse manner so as to be output from a WDM device X 112₄. Thus, the transmission devices according to the present embodiment can process multiple-wavelength signals including more than two wavelength bands.

In the above-described embodiments, the multiple-wavelength signals A-band and B-band correspond to multiple-wavelength signals (multiplex optical signals) of two different wavelength bands. The A-band common unit and the B-band common unit correspond to a first optical amplifier amplifying a signal of a first wavelength band and a second optical amplifier amplifying a signal of a second wavelength band, respectively. The elements replacing the A-band common unit and the B-band common unit also correspond to the first optical amplifier and the second optical amplifier. The WDM devices X and the WDM devices Y correspond to a wavelength division multiplexing unit as dividing means or multiplexing means.

The present invention is not limited to the specifically disclosed embodiments, and variations and modifications may be made without departing from the scope of the present invention.

The present application is based on Japanese priority application No. 2001-329085 filed on October 26, 2001, the entire contents of which are hereby incorporated by reference.

## Claims

1. A transmission device (30; 58) housing a plurality of transmission lines (1, 2) each propagating multiplex optical signals of a plurality of wavelength bands (A-band, B-band),
**characterized by** comprising:
an optical amplifier (36, 38) used commonly for each of said wavelength bands (A-band, B-band), the optical amplifier (36, 38) being provided commonly for all of said transmission lines (1, 2).

2. The transmission device (30; 58) as claimed in claim 1, **characterized by** further comprising a wavelength division multiplexing unit (32, 34) dividing said multiplex optical signals propagated through each of said transmission lines (1, 2) according to said wavelength bands (A-band, B-band) so as to supply each of said multiplex optical signals to said optical amplifier (36, 38), and multiplexing each of said multiplex optical signals amplified by said optical amplifier (36, 38) so as to output said multiplex optical signals.

3. A transmission device (30; 58) housing a first transmission line (1) and a second transmission line (2) each propagating a multiplex optical signal of a first wavelength band (A-band) and a multiplex optical signal of a second wavelength band (B-band),
**characterized by** comprising:
a first optical amplifier (36) provided commonly for said first transmission line (1) and said second transmission line (2) so as to amplify said multiplex optical signal of said first wavelength band (A-band) propagated through each of said first transmission line (1) and said second transmission line (2); and
a second optical amplifier (38) provided commonly for said first transmission line (1) and said second transmission line (2) so as to amplify said multiplex optical signal of said second wavelength band (B-band) propagated through each of said first transmission line (1) and said second transmission line (2).

4. The transmission device (30; 58) as claimed in claim 3, **characterized by** further comprising a wavelength division multiplexing unit (32, 34) dividing said multiplex optical signal of said first wavelength band (A-band) and said multiplex optical signal of said second wavelength band (B-band) propagated through each of said first transmission line (1) and said second transmission line (2) so as to supply said multiplex optical signal of said first wavelength band (A-band) and said multiplex optical signal of said second wavelength band (B-band) to said first optical amplifier (36) and said second optical amplifier (38), respectively, and multiplexing said multiplex optical signal of said first wavelength band (A-band) and said multiplex optical signal of said second wavelength band (B-band) amplified by said first optical amplifier (36) and said second optical amplifier (38), respectively, so as to output said multiplex optical signal of said first wavelength band (A-band) and said multiplex optical signal of said second wavelength band (B-band).

5. The transmission device (30) as claimed in claim 3 or 4, **characterized in that**:
said multiplex optical signal of said first wavelength band (A-band) propagated through said first transmission line (1) and said multiplex optical signal of said first wavelength band (A-band) propagated through said second transmission line (2) are supplied into said first optical amplifier (36) in opposite directions; and
said multiplex optical signal of said second wavelength band (B-band) propagated through said first transmission line (1) and said multiplex optical signal of said second wavelength band (B-band) propagated through said second transmission line (2) are supplied into said second optical amplifier (38) in opposite directions.

6. The transmission device (58) as claimed in claim 3 or 4, **characterized in that**:
said multiplex optical signal of said first wavelength band (A-band) and said multiplex optical signal of said second wavelength band (B-band) are transmitted to the transmission device (58) in an identical direction through each of said first transmission line (1) and said second transmission line (2);
said multiplex optical signal of said first wavelength band (A-band) transmitted through said first transmission line (1) and said multiplex optical signal of said first wavelength band (A-band) transmitted through said second transmission line (2) are supplied into said first optical amplifier (36) in opposite directions; and
said multiplex optical signal of said second wavelength band (B-band) transmitted through said first transmission line (1) and said multiplex optical signal of said second wavelength band (B-band) transmitted through said second transmission line (2) are supplied into said second optical amplifier (38) in opposite directions.

7. The transmission device (30; 58) as claimed in one of claims 3 to 6, **characterized in that** said first wavelength band (A-band) in said first transmission line (1) and said second transmission line (2) includes channels of different wavelengths (A-band 1, A-band 2), and said second wavelength band (B-band) in said first transmission line (1) and said second transmission line (2) includes channels of different wavelengths (B-band 1, B-band 2).

8. The transmission device (30; 58) as claimed in claim 4, **characterized by** further comprising:
an optical coupler (CPL-A, CPL-B) provided on each of transmission lines transmitting one of said multiplex optical signal of said first wavelength band (A-band) and said multiplex optical signal of said second wavelength band (B-band) divided by said wavelength division multiplexing unit (32, 34); and
a monitoring unit (68₁, 682, 68₃ and 68₄) monitoring the one of said multiplex optical signal of said first wavelength band (A-band) and said multiplex optical signal of said second wavelength band (B-band) branched by said optical coupler (CPL-A, CPL-B).

9. The transmission device (30; 58) as claimed in claim 4, **characterized by** further comprising gain equalizers (94₁, 94₂; 96₁, 96₂) provided at a preceding stage and a subsequent stage of each of said first optical amplifier (36) and said second optical amplifier (38).

10. The transmission device (30; 58) as claimed in claim 4, **characterized in that** each of said first optical amplifier (36) and said second optical amplifier (38) comprises two optical amplification mediums, and a gain equalizer (98) placed therebetween.

11. The transmission device (30; 58) as claimed in claim 4, **characterized in that** each of said first optical amplifier (36) and said second optical amplifier (38) comprises two optical amplification mediums supplied with excitation lights from inside between said two optical amplification mediums.

12. The transmission device (30; 58) as claimed in claim 4, **characterized in that** a drive current driving an excitation laser diode (102₁, 102₂) supplying an excitation light to each of said first optical amplifier (36; 104) and said second optical amplifier (38; 106) is controlled such that optical output power levels of output multiplex optical signals of either of said first wavelength band (A-band) and said second wavelength band (B-band) make a constant sum.
